(19) Europäisches Patentamt
European Patent Office
Office européen des brevets

(11) EP 3 127 950 A1

(12) EUROPEAN PATENT APPLICATION

(43) Date of publication:
**08.02.2017 Bulletin 2017/06**

(21) Application number: **15179532.5**

(22) Date of filing: **03.08.2015**

(51) Int Cl.:
***C08J 9/28*** *(2006.01)*
***B01J 20/26*** *(2006.01)*
***B01D 53/02*** *(2006.01)*
***B01J 20/28*** *(2006.01)*

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **BASF SE**
**67056 Ludwigshafen am Rhein (DE)**

(72) Inventors:
- **SUJANDI, Sujandi**
  **670466 Singapore (SG)**
- **DALVI, Vaibhav Ramchandra**
  **120604 Singapore (SG)**
- **BAO, Zhan**
  **228163 Singapore (SG)**
- **PERUMBODADATHU SUDHAKARAN, Deepa**
  **Singapore (SG)**

(74) Representative: **Steinbusch, Daniel**
**Isenbruck Bösl Hörschler LLP**
**Eastsite One**
**Seckenheimer Landstrasse 4**
**68163 Mannheim (DE)**

# (54) NANOPOROUS AMINO RESINS COMPOSITION FOR ACID GAS ADSORPTION-DESORPTION

(57) The invention relates to a process for the preparation of nanoporous amino resin foams, the nanoporous amino resin foams obtainable by this process and the use of the foams for acid gas adsorption-desorption application.

EP 3 127 950 A1

## Description

The invention relates to a process for the preparation of nanoporous amino resin foams, the nanoporous amino resin foams obtainable by this process and the use of the foams for acid gas adsorption-desorption application.

Selective adsorption-desorption of acid gas especially for removal of carbon dioxide gas is of important commercial and environmental values. Selective carbon dioxide removal through adsorption-desorption is used to capture carbon dioxide from flue gas of various combustion sources such as electricity power plant. It also has important application for carbon dioxide removal from agriculture products cold storage where the carbon dioxide level can reach 20.000 ppm due to the continuous respiration the stored agriculture product. High carbon dioxide level inside the cold storage will affect cooling efficiency, result in higher energy consumption for maintaining low storage temperature and cause high spoilage ratio of the stored agriculture products. It also may be used in enhanced oil recovery (EOR) in which carbon dioxide is reinjected into gas or liquid hydrocarbon reservoir.

The state-of-the-art technologies for carbon dioxide removal include cryogenic distillation/condensation, scrubbing with aqueous amine solution and adsorption with microporous materials such as activated carbon and zeolitic materials as solid adsorbents. However the abovementioned technologies suffer several disadvantages such as they require high energy for regeneration of aqueous amine solution and they are sensitive to moisture and temperature change for microporous solid adsorbents which affect the adsorption capacity and efficiency. It also requires for the carbon dioxide stream gas to be cooled down to relatively low temperatures which is required for the carbon dioxide uptake. Therefore the carbon dioxide removal cost is affected significantly by the required heat exchange capacities and energy requirement for gas cooling and heating and the costs for carbon dioxide desorption for adsorbent regeneration.

Amino groups adsorb carbon dioxide through chemical reaction which is also known as chemisorption process. Primary and secondary amino groups adsorbed carbon dioxide through zwitterion mechanism whereas adsorption at tertiary amino Site is governed by base-catalyzed hydration of carbon dioxide. Moreover amino groups are not sensitive to moisture instead the presence of moisture improve adsorption efficiency and capacity because only one amine site and one water molecule are required to capture one carbon dioxide molecule. It is also well reported that the heat of carbon dioxide chemisorption on supported amine sites on solid materials is much lower than that of aqueous amines meaning much lower regeneration energy is required to regenerate amino group supported solid adsorbent.

The use of melamine based amino resins for carbon dioxide adsorption is described for example in J. Mater. Chem. 21, 5226 to 5229 (2011) by A. Wilke. This document reported carbon dioxide adsorption capacity in the range of 1-7 wt% which is quite low. The possible reasons for the low carbon dioxide adsorption capacity are the inaccessibility of amino group by carbon dioxide molecule and the low reactivity of the melamine’s secondary and aromatic amines toward carbon dioxide.

The use of carbon dioxide solid adsorbent based on cross-linked polyamine such as polyethylene imine (PEI) and polyvinylamine (PVAm) is described in US Patent Publication US 2012/0160097 A1. The crosslinking of high molecular weight polyamines, however, create a strong steric obstruction that lead to the poor diffusion of carbon dioxide in the solid adsorbent to reach the amine groups. Hence the utilization ratio of the amine group for carbon dioxide adsorption is low.

Modification of high surface area nanoporous solid such as MCM and SBA families with amine group through silanization and the application for carbon dioxide adsorption is well known in literatures. The reported carbon dioxide adsorption capacity per gram absorber is usually below 13 wt% (3 mmol carbon dioxide). Higher carbon dioxide adsorption capacity can be achieved by impregnating polyamines such as polyethylene imine (PEI) into the pores of the nanoporous solid as described in WO 2012/099913 A1. However, in order to achieve high carbon dioxide adsorption capacity the loading ratio or the amount of polyethylene imine impregnated into nanoporous solid needs to be very high i.e. 80 wt% or above. Such a high loading ratio creates a high density solid adsorbent and causes that the polyethylene imine completely fills the nanopores of the solid which also lead to the poor diffusion of carbon dioxide into the solid adsorbent to reach the amine groups.

It is therefore an object of the present invention to overcome the above mentioned disadvantages and to provide a method for the production of low density nanoporous amino resin foams comprising of amino resins and polyamines and/or organoamines. The invention also relates to the use of said nanoporous amino resin foam as high capacity carbon dioxide solid adsorbents for example in application for carbon dioxide removal in agriculture products cold storages, but without limitation thereof.

The present invention therefore relates to a process for the preparation of nanoporous amino resin foam comprising at least the following steps:

a) providing an aqueous micellar emulsion template, comprising at least one block copolymer, preferably based on ethylene oxide and propylene oxide,
b) expanding the micelle prepared in step (a) by adding at least one organic micelle expander,

c) combining the expanded micelle from step (b) with at least one amino resin,
d) adding at least one curing catalyst,
e) optionally adding at least one organosilane,
f) adding at least one heteroatom dopant precursor,
g) adding at least one polyamine and/or organoamine,
h) optionally adding at least one polyvinylformamide, preferably at least one linear polyvinylformamide,
i) curing the at least one amino resin at a temperature of at least 40 °C to obtain a gel,
j) optionally replacing water and micellar emulsion template by at least one solvent with a boiling point at atmospheric pressure at a temperature of at most 100 °C,
k) drying the gel at a temperature of 1 to 40 °C and at a pressure of 0.95 to 1.05 bar (a),
l) optionally mixing the nanoporous amino resin obtained from step k) with at least one polyamine and/or organoamine in a solvent medium and
m) drying the mixture at a temperature of 1 to 100 °C and at a pressure of 0.01 to 1.05 bar (a)

Preferably the at least one block copolymer used in step a) is based on ethylene oxide and propylene oxide, more preferably is a polyoxyethylene-polyoxypropylene-polyoxyethylene triblock copolymer. The block length can be varied in a wide range and many different types of these surfactants are commercially available, such as Pluronic® triblock co-polymers from BASF SE. The number averaged molecular weight Mn of the block copolymer is preferably in the range of 2,500 to 10,000. The HLB-value of the block copolymer is preferably in the range of 7 - 12. Most preferably the block copolymer used in step a) is a polyoxyethylene-polyoxypropylene-polyoxyethylene triblock copolymer having a number averaged molecular weight Mn in the range of 2,500 to 10,000.

In step b) the micelle is expanded by adding at least one organic micelle expander. Suitable micelle expanders are solvents selected from the group consisting of hydrocarbon solvents, preferably pentane, hexane, cyclohexane, heptane, octane, cyclooctane, decane, isooctane, dodecane; aromatic solvents, preferably toluene, xylene, ethylbenzene, isopropylbenzene, and mixtures thereof. Most preferably 1,3,5-trimethylbenzene is used as organic micelle expander.

The present invention therefore preferably relates to the process according to the present invention, wherein the at least one micelle expander is selected from the group consisting of hydrocarbon solvents, preferably pentane, hexane, cyclohexane, heptane, octane, cyclooctane, decane, isooctane, dodecane; aromatic solvents, preferably toluene, xylene, ethylbenzene, isopropylbenzene, and mixtures thereof. Most preferably 1,3,5-trimethylbenzene is used as organic micelle expander.

According to the present invention, the size of the pores of the nanoporous amino resin can be controlled by the molar ratio of organic micelle expander to ethylene oxide - propylene oxide block copolymer. Preferably the molar ratio by weight is in the range of 10 : 1 to 1 : 10, most preferably in the range of 5 : 1 to 1 : 5.

According to step c) of the process according to the present invention, the expanded micelle from step b) is combined with at least one amino resin. Preferably the at least one amino resin is selected from the group consisting of urea-formaldehyde, benzoguanamine-formaldehyde, melamine-formaldehyde resin and mixtures thereof. Particularly preferably, the at least one amino resin is etherified with a $C_1$ - $C_6$ - alcohol, more preferably with n-butanol, isobutanol, methanol or mixtures thereof.

The present invention therefore preferably relates to the process according to the present invention, wherein the at least one amino resin is selected from the group consisting of urea-formaldehyde, benzoguanamine-formaldehyde, melamine-formaldehyde resin and mixtures thereof.

The at least one amino resin is preferably added to the expanded micelle in form of a solution in water, methanol, ethanol, isobutanol, butyl glycol, xylene or mixtures thereof. For example, commercially available solutions comprising a nonvolatile content (2g/ 2h/125 °C) in the range from 50 - 95% are employed.

The density of the nanoporous amino resin foam that is obtained with the process according to the present invention can preferably be controlled by the amount of amino resin. Preferably, the amino resin is used in an amount of 1 to 25 % by weight, most-preferably in an amount of 5 to 15 % by weight, based on solids of all compounds used in step a) to d) in each case.

Particular preference is given to a melamine-formaldehyde resin modified by an alcohol and having a melamine/formaldehyde ratio in the range of 1 : 1 to 1 : 10, preferably of 1 : 2 to 1 : 6.

According to step d), at least one curing catalyst is added. The type and amount of the catalyst depend upon the amino resin used. For amino resins, for example, organic or inorganic acids, e.g. phosphoric acid, hydrochloric acid or carboxylic acids such as acetic acid or formic acid, may be used. Combinations with salts may also be helpful in the control of the reaction kinetics.

The present invention therefore preferably relates to the process according to the present invention, wherein the at least one curing catalyst is selected from the group consisting of organic or inorganic acids.

Further, in addition to the at least one curing catalyst, crosslinking components may be used as curing agents,

for example selected from the group consisting of urea or 2,4-diamino-6-nonyi-1,3,5-triazine in the case of melamine-formaldehyde resins.

Nanoporous amino resin foams with higher porosity can be achieved with the process according to the present invention, if the network strength is improved. This is for example possible by adding at least one organosilane in step e) of the process according to the present invention. In principle, all organosilane that are known to the skilled artisan may be used. Most advantageously alkoxysilanes are used, most preferably 3-aminoproyltriethoxysilane. Other amino group containing alkoxysilanes according to following structures of formula (I) to (IV) are also preferred:

(I) $NH_2R^1SiY_3$
(II) $R^2NHR^1SiY_3$
(III) $NH_2R^3NHR^1SiY_3$
(IV) $Y_3SiR^4NHR^1SiY_3$

wherein $R^1$, $R^2$, $R^3$ and $R^4$ independently of another represent an organic group with 1 to 20 carbon atoms, preferably 1, 2, 3, 4, 5, 6, 7, or 8 carbon atoms, which does not undergo hydrolysis in the presence of water (non-hydrolysable group) and wherein each Y independently of another represents a hydrolysable alkoxy group. Preferably Y is methoxy, ethoxy, propoxy, isopropoxy or tert-butoxy.

Preferably, $R^1$, $R^3$ and $R^4$ are independently of another an alkylene or arylene group, particularly preferred a linear alkylene group. Preferred alkylene groups as $R^1$, $R^3$ and $R^4$ are methylene, ethylene, propylene, in particular n-propylene, hexylene, in particular n-hexylene, and octylene, in particular n-octylene

Preferably, $R^2$ is an aliphatic group. Preferred aliphatic groups as $R^2$ are methyl, ethyl, propyl in particular n-propyl, butyl in particular n-butyl, hexyl in particular n-hexyl and octyl in particular n-octyl.

Preferably the at least one organosilane is used in an amount of 1 to 25 % by weight, most preferably in an amount of 5 to 15 % by weight, based on the amount of amino resin used in step c) in each case.

The addition of at least one organosilane in step e) of the process according to the present invention, preferably creates a nanoporous amino resin-silica hybrid foam, wherein the added at least one organosilane undergoes hydrolysis and condensation during the whole process forming a discrete silicate nanoparticle that is preferably homogenously dispersed in the nanoporous amino resin foam matrix.

One of the advantageous characteristics of silicate materials that may be present in the nanoporous amino resin foam according to this embodiment of the process according to the present invention is the ability to dope its matrix with heteroatoms. Therefore, the process according to the present invention preferably comprises step f) adding at least one heteroatom dopant precursor.

Most advantageous the heteroatom that is added in step f) of the process according to the present invention is at least one metal which can, for example, be selected from the group consisting of alkali metals, alkali earth metals, transition metals, rare earth metals and mixtures thereof.

The metal precursors for heteroatom dopant can be selected from the group consisting of metal alkoxide, metal halide, metal oxy alkoxide, metal oxy halide, metal alkylcarboxylate, metal alkyl ß-diketone and mixtures thereof. Most preferably zirconium is doped on the silicate matrix and the preferred zirconium precursors are according to following structures:

(V) $ZrY_4$
(VI) $ZrX_{2-4}$
(VII) $ZrOX_2$

(VIII) 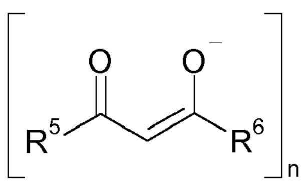 Zr

wherein each Y independently of another represents a hydrolysable alkoxy group. Each X independently of another represents a hydrolysable halide group. Preferably, Y is independently of another selected from the group consisting of methoxy, ethoxy, propoxy, isopropoxy, tert-butoxy and mixtures thereof. Preferably, X is independently of another selected from the group consisting of chloride, bromide, iodide and mixtures thereof. $R^5$ and $R^6$ independently of another may represent an organic group with 1 to 20 carbon atoms, preferably 1, 2, 3, 4, 5, 6, 7, or 8 carbon atoms. More, preferably, $R^5$ and $R^6$ are independently of another an aliphatic or aryl group, particularly preferred a linear aliphatic

group. Preferred aliphatic groups as $R^5$ and $R^6$ are methyl, ethyl, propyl, in particular n-propyl, butyl, in particular n-butyl, hexyl, in particular n-hexyl and octyl, in particular n-octyl.

The present invention therefore preferably relates to the process according to the present invention, wherein at least one heteroatom dopant precursor is added in step f), selected from zirconium precursors according to following structures:

(VIII) $ZrY_4$
(IX) $ZrX_{2-4}$
(X) $ZrOX_2$

(VIII) 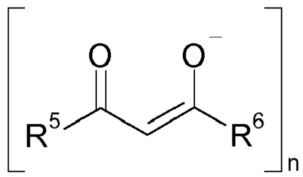 Zr

wherein each Y independently of another represents a hydrolysable alkoxy group, each X independently of another represents a hydrolysable halide group and $R^5$ and $R^6$ independently of another may represent an organic group with 1 to 20 carbon atoms. Preferred embodiments are mentioned above.

Another advantage of addition of zirconium precursor into the synthesis mixture is the generation of Zr(IV) cation through hydrolysis which can act as curing catalyst to enhance or even to completely replace the curing catalyst added in step d).

According to the present invention, preferably the at least one heteroatom dopant precursor, in particular the at least one zirconium precursor, is used in an amount of 1 to 20% by weight, most preferably in an amount of 5 to 15% by weight, based on the amount of organosilane used in step e) in each case.

In step g) of the process according to the present invention, at least one polyamine and/or organoamine is added.

Suitable polyamines that are added in step g) preferably have at least two primary amino groups and may have optionally at least one melamine derivative.

Preferably, one or more of the following polyamines are used:

a) diamines having two primary amino groups with following structure

(IX) $NH_2\text{-}A\text{-}NH_2$

wherein A is a divalent aliphatic, alicyclic, aliphatic-alicyclic, aromatic or araliphatic group, where the aforementioned groups may also be interrupted by a heteroatoms in the carbon chain or in the carbon framework as in the case of polyoxyalkylene diamines and may also, if appropriate, be substituted, with OH groups, for example. Examples of suitable diamines having two primary amino groups are ethylenediamine, 1,2- and 1,3-propylenediamine, 2,2-dimethyl, 1,3-propanediamine, butylenediamine, pentanediamine, hexamethylenediamine, heptanediamine, octanediamine, nonanediamine, decanediamine, dodecanediamine, hexadecanediamine, tolylenediamine, xylylenediamine, diamino-diphenylmethane, diaminodicyclohexylmethane, phenylene-diamine, cyclohexylenediamine, diaminodiphenyl sulfone, isophoronediamine, bis(aminomethyl)cyclohexane, 2-butyl-2-ethyl-1, 5-pentamethylenediamine, 2,2,4- or 2,4,4-trimethyl-1,6-hexamethylenediamine, 2-aminopropylcyclohexylamine, 3(4)-amino-methyl-1-methylcyclohexylamine, 1,4-diamino-4-methyipentane$_i$amine-terminated polyoxyalkylene polyols (known as Jeff-amines) or amine-terminated polytetramethylene glycols.

b) polyalkylenepolyamines having two primary amino groups and contain secondary or tertiary amino group with following structure

(X) $H_2N\text{-}[\text{-}B\text{-}NR^7\text{-}]_a\text{-}B\text{-}NH_2$

wherein each $R^7$ is independently of another H, $C_1$-$C_4$-alkyl, $C_2$-$C_4$-hydroxyalkyl or $C_1$-$C_4$-alkoxy and is preferably H, $C_1$-$C_4$-alkyl or $C_1$-$C_4$-alkoxy; each B is independently of another $C_2$-$C_6$-alkylene; and a is a number from 1 to 100,000, preferably 1 to 10,000 and in particular 1 to 1000.

Preferred examples are diethylenetriamine, 3-(2-amino-ethyl)aminopropylamine (N3-amine), dipropylenetriamine, N, N-bis-(3-aminopropyl)-methylamine, (N,N-bis(3-aminopropyl) ethylenediamine (N4-amine) and tetra-ethylenepentamine and linear polyethyleneimines with number averaged molecular weight Mn in the range of 2,500 - 1,000,000, preferably in the range of 2,500 - 250,000 and most preferably in the range of 2,500 -100,000. Example of linear polyethylene imines is Polymin® from BASF SE.

c) branched polyethyleneimines such as Polymin® from BASF SE. The polymer chain length can be varied in a wide range and many different types of these polymers are commercially available. The number averaged molecular weight Mn of the branched polyethyleneimines is in preferably the range of 2,500 - 1,000,000, more preferably in the range of 2,500 - 250,000 and most preferably in the range of 2,500 - 100,000, g/mol. A typical structure of branched polyethyleneimines, but without limitation thereof, is following:

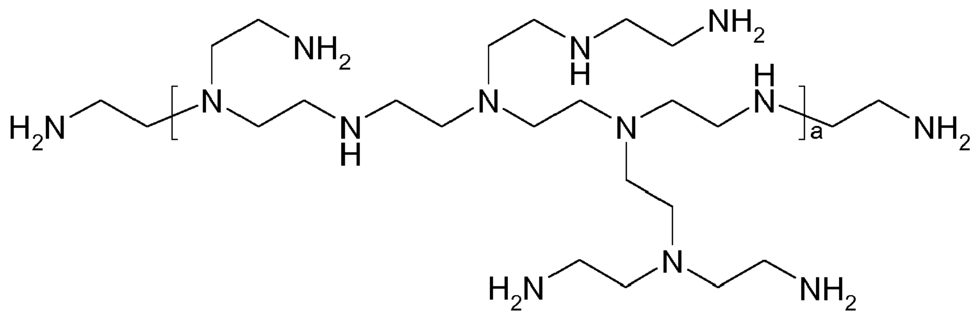

(XI)

wherein a is a number from 1 to 100,000, preferably 1 to 10,000 and in particular 1 to 1000

d) Polyamines derived from highly branched polymers containing primary, secondary and tertiary amino groups. The expression "highly branched polymers" refers for the purposes of this invention, quite generally, to polymers which are distinguished by a strongly branched structure and a high functionality. For the general definition of highly branched polymers, reference is also made to P. J. Flory, J. Am. Chem. Soc. 1952, 74, 2718, and H. Frey et al., Chem. Eur. J. 2000, 6, No. 14, 2499, where they are referred to, in deviation from the definition chosen here, as "hyperbranched polymers".

The highly branched polymers in the sense of the invention include star polymers, dendrimers, arborols, and highly branched polymers different therefrom, such as hyperbranched polymers.

Star polymers are polymers in which three or more chains extend from a center. This center may be a Single atom or a group of atoms.

Dendrimers derive structurally from the star polymers, but with star branching in each of the individual chains. Dendrimers are formed starting from small molecules by means of a continually repeating reaction sequence resulting in ever higher numbers of branches, at whose ends there are in each case functional groups which, in turn, are a starting point for further branches. Hence, the number of monomer end groups grows exponentially with each reaction step, ultimately resulting in a tree structure which in the ideal case is spherical. A characteristic feature of the dendrimers is the number of reaction stages (generations) carried out for the purpose of their synthesis. On the basis of their uniform construction (in the ideal case, all of the branches comprise exactly the same number of monomer units), dendrimers are substantially monodisperse, i.e., they generally have a defined molar mass.

Both molecularly and structurally uniform highly branched polymers will also be referred to in common below as dendrimers.

"Hyperbranched polymers" in the context of this invention are highly branched polymers which, in contradistinction to the abovementioned dendrimers, are both molecularly and structurally non-uniform. They have side chains and/or side branches which differ in length and branching, and also a molar mass distribution (polydispersity).

Highly branched polymers preferably have a degree of branching (DB) per molecule of 10% to 100%, more preferably 10% to 90%, and more particularly 10% to 80%. This degree of branching, DB, is defined as

$$DB (\%) = (T + Z) / (T + Z + L) * 100,$$

where

T is the average number of terminally attached monomer units,

Z is the average number of branch-forming monomer units,
L is the average number of linearly attached monomer units.

Dendrimers generally have a degree of branching DB of at least 99%, especially 99.9% to 100%.

Hyperbranched polymers preferably have a degree of branching DB of 10% to 95%, more preferably 25% to 90%, and more particularly 30% to 80%.

The highly branched polymers d) used according to the invention preferably have a degree of branching DB of 10% to 100%, preferably 20% to 95%, more preferably 25% to 90%, in particular 30% to 80%.

In order to achieve advantageous performance properties it is preferably possible to use not only the structurally and molecularly uniform dendrimers, but also hyperbranched polymers. Hyperbranched polymers, however, are generally easier and hence more economic to prepare than dendrimers. Thus, for example, the preparation of the monodisperse dendrimers is complicated by the fact that, at each linking step, protective groups have to be introduced and removed again, and, before the beginning of each new growth stage, intense cleaning operations are needed, which is why dendrimers can typically be prepared only on a laboratory scale.

The highly branched polymer d) used according to the invention preferably have number average molecular weight Mn in the range of about 2,500 to 1,000,000, preferably 2,500 to 250,000, more particularly 2,500 to 100,000.

Preferred polyamines with highly branched polymeric structures d) and methods for their preparation are the following ones.

High functionality, highly branched polyureas which comprises reacting one or more ureas with one or more amines having at least two primary and/or secondary amino groups, wherein at least one amine has at least three primary and/or secondary amino groups according to WO 2005/075541.

Hyperbranched polymers comprising guanidine units, according to WO 2009/027186.

Highly branched melamine polymers, obtainable by reacting melamine with 1.5 to 4 mol of one or several polyamines per mol of melamine in the presence of an acidic catalyst, wherein up to 25 mol % of the polyamines can have three or more primary amino groups and up to 50 mol % of the polyamines can be substituted by amines with only one primary amino group, according to WO 2008/148766.

Highly branched urea-melamine polymers, wherein urea or a urea derivative, melamine, and at least one amine are condensed, wherein said at least one amine comprises a diamine or polyamine having two primary amino groups, according to WO 2009/080787.

Highly branched melamine-polyamine polymers, obtainable by condensing melamine and optionally a melamine derivate with at least one different amine having at least two primary amino groups and optionally also with urea and/or at least one urea derivative and/or with at least one at least difunctional diisocyanate or polyisocyanate and/or at least one carboxylic acid having at least two carboxyl groups or at least one derivative thereof, optionally quarternizing a portion of the amino groups of the polymer thereby obtained, reacting the polymer thus obtained with at least one compound capable of undergoing a condensation or addition reaction with amino groups, and optionally quarternizing at least part of the amino groups of the polymer obtained in the first step, according to WO 2011/073246.

Example of polyamines with highly branched polymeric structure, but without limitation thereof, is shown in following structure:

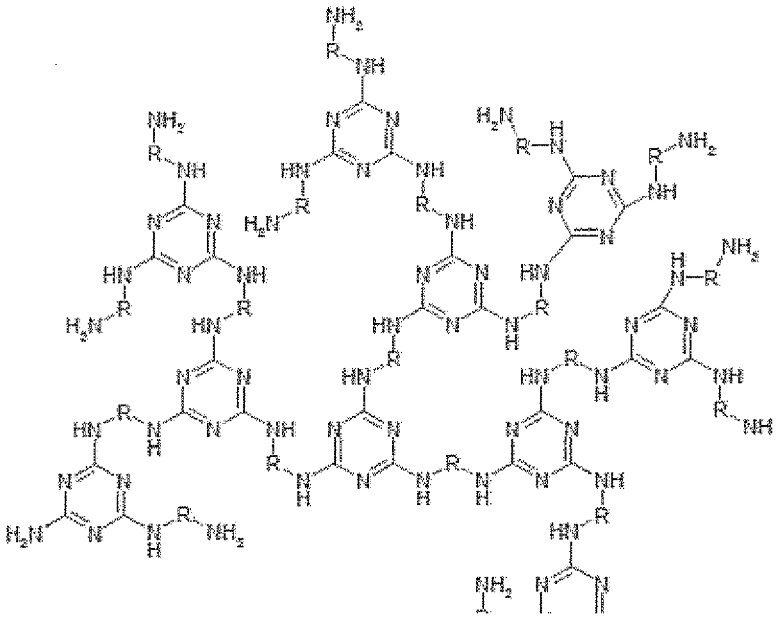

(XII)

Preferred organoamines are primary and secondary organoamines according to following structure formula (V) to (VI):

(V) $R^5NH_2$
(VI) $R^5NHR^6$

wherein $R^5$ and $R^6$ independently of another represent an organic group with 1 to 20 carbon atoms, preferably 1, 2, 3, 4, 5, 6, 7, or 8 carbon atoms.

Preferably, $R^5$ and $R^6$ are independently of another aliphatic groups, Particularly preferred aliphatic groups as $R^5$ and $R^6$ are methyl, ethyl, propyl, in particular n-propyl, butyl, in particular n-butyl, hexyl, in particular n-hexyl and octyl, in particular n-octyl. Dialkylamines, such as diethylamine (DEA) are most preferred.

The optional addition of at least one polyvinylformamide, preferably at least one linear polyvinylformamide, in step h) preferably prevents the nanoporous amino resin foam from cracking during drying.

Preferably, the polyvinylformamide used in step h) is a linear high molecular weight polyvinylformamide produced by polymerization of vinylformamide such as Lupamin® from BASF SE. The polymer chain length can be varied in a wide range and many different types of these polymers are commercially available. The number averaged molecular weight Mn of the linear polyvinylformamide is preferably in the range of 10,000 - 340,000 g/mol. The formamide group can be hydrolyzed to form amine group with hydrolysis/degree in the range from 10 - 95%. The term of hydrolysis degree mean the percentage of formamide group that are hydrolyzed to amino group.

According to the present invention, after steps i), j) and k) the obtained nanoporous amino resin is mixed with at least one polyamine and/or organoamine in a solvent medium according to step l). Suitable polyamines and organoamines that can be mixed with the otabined nanoporous amino resin are those as disclosed in respect of step g).

The solvent medium according to step l) is selected from the group consisting of water, low boiling point alcohols, low boiling point ketones and mixtures thereof, preferably the solvent medium is selected from the group consisting of ethanol, n-propanol, isopropanol, n-butanol, methyl ethyl ketone, dimethyl ketone, diethyl ketone, ethyl isopropyl ketone, 2-pentanone and mixtures thereof, most preferably the solvent medium is either ethanol or dimethyl ketone.

According to a preferred embodiment of the present invention, optional steps e), f), h), j) and l) are conducted. The present invention therefore preferably relates to the orocess according to the present invention, comprising at least the following steps:

a) providing an aqueous micellar emulsion template, comprising at least one block copolymer, preferably based on ethylene oxide and propylene oxide,
b) expanding the micelle prepared in step (a) by adding at least one organic micelle expander,
c) combining the expanded micelle from step (b) with at least one amino resin,
d) adding at least one curing catalyst,
e) adding at least one organosilane,
f) adding at least one heteroatom dopant precursor,

g) adding at least one polyamine and/or organoamine,

h) adding at least one polyvinylformamide, preferably at least one linear polyvinylformamide,

i) curing the at least one amino resin at a temperature of at least 40 °C to obtain a gel,

j) replacing water and micellar emulsion template by at least one solvent with a boiling point at atmospheric pressure at a temperature of at most 100 °C, and

k) drying the gel at a temperature of 1 to 40 °C and at a pressure of 0.95 to 1.05 bar (a),

l) mixing the nanoporous amino resin obtained from step k) with at least one polyamine and/or organoamine in a solvent medium,

m) drying the mixture at a temperature of 1 to 100 °C and at a pressure of 0.01 to 1.05 bar (a).

According to the present invention, the combination of the at least one amino resin, the at least one ethylene oxide-propylene oxide block copolymer, the at least one catalyst component, the at least one organic expander component, the at least one organosilane, the at least one polyamine and/or organoamine, the at least one polyvinylformamide and the amount of water required to set the desired structure thus provides a curable microemulsion whose microstructure is substantially preserved during the polycondensation of the reactive components.

The microemulsion of the combined components are preferably homogenized with a high pressure homogenizer at a pressure in the range of 10 to 90 MPa to yield an emulsion with micellar droplets, preferably in the range of 10 to 200 nm.

The weight ratio of the overall aqueous phase to the overall oil phase (W/O ratio) is generally 95 : 5 to 5 : 95, preferably 80 : 20 to 20 : 80.

The solvent in optional step j) for replacing the water and the micelle template in the wet gel is preferably a hydrocarbon, alcohol, ketone, ether, alkyl ester, or mixture thereof having a boiling point at atmospheric pressure between 25 and 75°C.

The gel can be dried in step k) at a temperature of 1 to 40 °C, preferably 15 to 25 °C and at a pressure of 0.95 to 1.05 bar (a), preferably at ambient temperature and atmospheric pressure.

The gel volume during the drying process can be pre-served in case of larger pore sizes in the range of 50 to 200 nm due to the lower capillary force.

The process according to the present invention applies controlled sol-gel chemistry and allows control of density and tailorable pore size, preferably even below 100 nm. The generation of nanosized pores may be achieved by removal of the template by simple solvent extraction and drying at ambient conditions. Expensive and tedious drying with supercritical carbon dioxide is not necessary.

The nanoporous polymer foams obtainable after drying the cured microemulsions feature high overall porosity and associated low bulk density and small pore size. The bulk density is preferably in the range of 5 to 250 $kg/m^3$ and the average pore diameter is in the range of 10 to 200 nm, preferably in the range of 50 to 150 nm.

The inventive nanoporous polymer foams comprise of amino resins and polyamines and/or organoamines, wherein the polyamines and/or organoamines are preferably homogenously dispersed in the nanoporous amino resin foam matrix and are therefore particularly suitable for lightweight and high capacity carbon dioxide adsorption applications such as in agriculture product cold storage.

The present invention therefore preferably relates to the nanoporous amino resin foam, obtainable, preferably obtained, by the process according to the present invention.

The present invention further relates to use of the nanoporous amino resin foam according to the present invention in carbon dioxide adsorption applications, for example in agriculture product cold storage, or in enhanced oil recovery (EOR), preferably in which carbon dioxide is reinjected into gas or liquid hydrocarbon reservoir.

The nanoporous amino resin foams according to the present invention have polyamines or organoamines homogeneously dispersed in the nanoporous melamine matrix. The nanoporous amino resin foams according to the present invention are therefore advantageously used as $CO_2$ absorbent, for example inside a cold storage where it preferably continuously absorbs the $CO_2$ released by the stored products, for example agriculture products. According to a preferred embodiment the level of $CO_2$ in the cold storage is maintained at ambient level which is at 2500 ppm.

The present invention further relates to the use of the foam according to the present invention for acid gas adsorption-desorption application, in particular for absorption of $CO_2$, more preferably in a cold storage.

Advantages of the nanoporous amino resin foams according to the present invention with polyamines or organoamines homogeneously dispersed in the nanoporous melamine matrix, in particular as $CO_2$ absorbent, is the light weight of the nanoporous $CO_2$ absorbent, easy access of the homogeneously dispersed polyamine/organoamine groups by $CO_2$ which leads to high $CO_2$ adsorption capacity. Further, the $CO_2$ solid absorbent is easily regenerated and multiple reuses are possible.

Examples:

Mixing of nanoporous MF foam with organoamine

In a typical mixing experiment to produce nanoporous amino resin suitable for used as $CO_2$ adsorbent, 1 g of melamine-formaldehyde (MF) nanofoam prepared according to the present invention was mixed with certain amount of organoamines in ethanol or acetone in a blender. The solid was separated from the solvent by centrifugation, collected and the excess solvent was removed with rotary evaporator at temperature of 40 °C and pressure of 0.5 bar and dry at room temperature overnight.

Example 1

In a typical mixing experiment to produce nanoporous amino resin suitable for used as $CO_2$ adsorbent, 1.00 g of melamine-formaldehyde (MF) nanofoam prepared according to the present invention was mixed with 1.00 g of tetraethylene pentamine (TEPA) and 0.40 g of diethanolamine (DEA) in 100 mL acetone in a blender. The solid was separated from the solvent by centrifugation at 2000 rpm, collected and the excess solvent was removed with rotary evaporator at temperature of 40 °C and pressure of 0.5 bar and dry at room temperature overnight.

Example 2

In a typical mixing experiment to produce nanoporous amino resin suitable for used as $CO_2$ adsorbent, 1 g of melamine-formaldehyde (MF) nanofoam prepared according to the present invention was mixed with 1.5 g of tetraethylene pentamine (TEPA), 0.6 g of diethanolamine (DEA) in 100 mL acetone in a blender. The solid was separated from the solvent by centrifugation at 2000 rpm, collected and the excess solvent was removed with rotary evaporator at temperature of 40 °C and pressure of 0.5 bar and dry at room temperature overnight.

Example 3

In a typical mixing experiment to produce nanoporous amino resin suitable for used as $CO_2$ adsorbent, 1.00 g of melamine-formaldehyde (MF) nanofoam prepared according to the present invention was mixed with 0.60 g of tetraethylene pentamine (TEPA), 0.24 g of diethanolamine (DEA) in 100 mL ethanol in a blender. The solid was separated from the solvent by centrifugation at 2000 rpm, collected and the excess solvent was removed with rotary evaporator at temperature of 60 °C and pressure of 0.2 bar and at temperature of 80 oC at 0.03 bar and dry at room temperature overnight.

Example 4

In a typical mixing experiment to produce nanoporous amino resin suitable for used as $CO_2$ adsorbent, 1.00 g of melamine-formaldehyde (MF) nanofoam prepared according to the present invention was mixed with 1.00 g of tetraethylene pentamine (TEPA), 0.40 g of diethanolamine (DEA) in 100 mL ethanol in a blender. The solid was separated from the solvent by centrifugation at 2000 rpm, collected and the excess solvent was removed with rotary evaporator at temperature of 60 °C and pressure of 0.2 bar and at temperature of 80 °C at 0.03 bar and dry at room temperature overnight.

$CO_2$ adsorption capacity measurement

Temperature programmed desorption (TPD) method was used for the measurement of the $CO_2$ adsorption capacity. The TPD method is also useful to determine the kinetic and thermodynamic of the $CO_2$ desorption. In a typical measurement for $CO_2$ adsorption capacity, the nanoporous amino resin sample is allowed to adsorb $CO_2$ first and in the second step the sample saturated with $CO_2$ is heated with a temperature program $\beta(t) = dT/dt$ with the temperature T usually a linear function of the time t and the partial pressures of $CO_2$ evolving from the sample were detected by a thermal conductivity detector (TCD) and measured the amount of the released $CO_2$.

Figure 1: TPD curve of $CO_2$ desorption from MF nanofoam.

A typical TPD result plot is shown in Figure 1. The steadily rising line shows the linear temperature increase overtime for room temperature to 200 °C during the desorption process. The curve shows the detection of $CO_2$ released starting from 50 °C. A peak is observed at 100 °C and the total amount of $CO_2$ released is calculated by integration of the peak area.

The amount of gas absorbed is 2116.02126 μmol/g.

The $CO_2$ adsorption capacities of examples 1 to 4 are shown in Table 1

Table 1:

| Example | MF : TEPA : DEA (w/w) | Solvent | $CO_2$ adsorption capacity (mmol/g) |
|---|---|---|---|
| 1 | 1 : 1 : 0.4 | Acetone | 1.92 |
| 2 | 1 : 1.5 : 0.6 | Acetone | 2.11 |
| 3 | 1 : 0.6 : 0.24 | Ethanol | 2.0 |
| 4 | 1 : 1 : 0.4 | Ethanol | 1.7 |

## Claims

**1.** Process for the preparation of a nanoporous amino resin foam comprising at least the following steps:

a) providing an aqueous micellar emulsion template, comprising at least one block copolymer based on ethylene oxide and propylene oxide,
b) expanding the micelle prepared in step (a) by adding an organic micelle expander,
c) combining the expanded micelle from step (b) with at least one amino resin,
d) adding a curing catalyst,
e) optionally adding at least one organosilane,
f) adding at least one heteroatom dopant precursor,
g) adding at least one polyamine and/or organoamine,
h) optionally adding at least one linear polyvinylformamide,
i) curing the at least one amino resin at a temperature of at least 50 °C to obtain a gel,
j) optionally replacing water and micellar emulsion template by a solvent with a boiling point at atmospheric pressure at a temperature of at most 100 °C,
k) drying the gel at a temperature of 15 to 40 °C and at a pressure of 0,8 to 1,20 bar (a),
l) optionally mixing the nanoporous amino resin obtained from step k) with at least one polyamine and/or organoamine in a solvent medium, and
m) drying the mixture at a temperature of 1 to 100 °C and at a pressure of 0.01 to 1.05 bar (a).

**2.** The process according to claim 1, comprising at least the following steps:

(a) providing an aqueous micellar emulsion template, comprising at least one block copolymer based on ethylene oxide and propylene oxide,
(b) expanding the micelle prepared in step (a) by adding an organic micelle expander,
(c) combining the expanded micelle from step (b) with at least one amino resin,
(d) adding a curing catalyst,
(e) adding at least one organosilane,
(f) adding at least one heteroatom dopant precursor,
(g) adding at least one polyamine and/or organoamine,
(h) adding at least one linear polyvinylformamide,
(i) curing the at least one amino resin at a temperature of at least 50 °C to obtain a gel,
(j) replacing water and micellar emulsion template by a solvent with a boiling point at atmospheric pressure at a temperature of at most 100 °C, and
(k) drying the gel at a temperature of 15 to 40 °C and at a pressure of 0,8 to 1,20 bar (a),
(l) mixing the nanoporous amino resin obtained from step k) with at least one polyamine and/or organoamine in a solvent medium, and
(m) drying the mixture at a temperature of 1 to 100 °C and at a pressure of 0.01 to 1.05 bar (a).

**3.** The process according to claims 1 or 2, wherein the at least one micelle expander is selected from the group consisting of hydrocarbon solvents, preferably pentane, hexane, cyclohexane, heptane, octane, cyclooctane, decane, isooctane, dodecane; aromatic solvents, preferably toluene, xylene, ethylbenzene, isopropylbenzene, and mixtures thereof.

**4.** The process according to any of claims 1 to 3, wherein the at least one amino resin is selected from the group

consisting of urea-formaldehyde, benzoguanamine-formaldehyde, melamine-formaldehyde resin and mixtures thereof.

**5.** The process according to any of claims 1 to 4, wherein the at least one curing catalyst is selected from the group consisting of organic or inorganic acids.

**6.** The Process according to any of claims 1 to 5, wherein the at least one heteroatom dopant precursor is added in step f), selected from zirconium precursors according to following structures:

(XI) $ZrY_4$
(XII) $ZrX_{2-4}$
(XIII) $ZrOX_2$

(VIII) 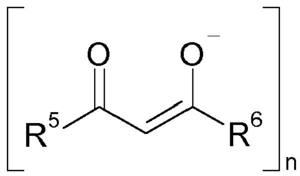 Zr

wherein each Y independently of another represents a hydrolysable alkoxy group, each X independently of another represents a hydrolysable halide group and $R^5$ and $R^6$ independently of another may represent an organic group with 1 to 20 carbon atoms.

**7.** Nanoporous amino resin foam obtainable, preferably obtained, by the process according to claim 1 or 6.

**8.** Use of the foam according to claim 7 for acid gas adsorption-desorption application, in particular for absorption of $CO_2$, more preferably in a cold storage

Nanoporous amino resins composition for acid gas adsorption-desorption

Fig. 1

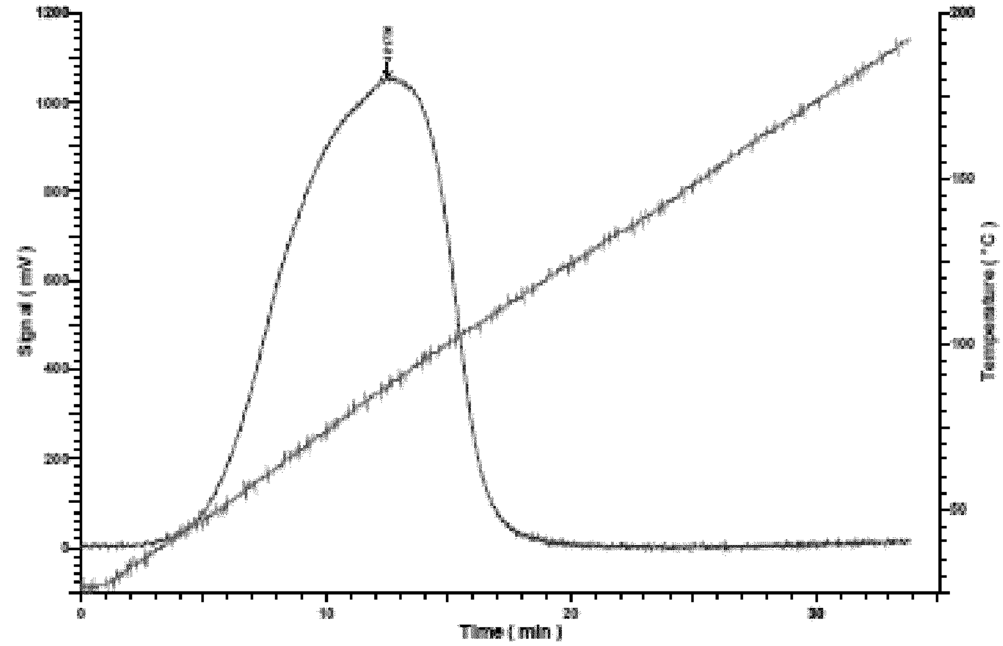

Europäisches Patentamt
European Patent Office
Office européen des brevets

# EUROPEAN SEARCH REPORT

Application Number
EP 15 17 9532

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2013/139885 A1 (BASF SE [DE]; BASF SCHWEIZ AG [CH]) 26 September 2013 (2013-09-26) * the whole document * ----- | 1-8 | INV. C08J9/28 B01J20/26 B01D53/02 B01J20/28 |
| Y | US 2012/007012 A1 (FRICKE MARC [DE] ET AL) 12 January 2012 (2012-01-12) * paragraph [0112] - paragraph [0136] * ----- | 1-8 | |
| A | WO 2012/018890 A2 (UNIV ARIZONA [US]; SEO DONG-KYUN [US]; VOLOSIN ALEX [US]) 9 February 2012 (2012-02-09) * paragraphs [0024], [0056] - [0058], [0064]; figures 21-24 * ----- | 1-8 | |

TECHNICAL FIELDS SEARCHED (IPC)
C08J
B01J
B01D

The present search report has been drawn up for all claims

2

| Place of search | Date of completion of the search | Examiner |
|---|---|---|
| The Hague | 20 January 2016 | Mayer, Anne |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO. EP 15 17 9532

This annex lists the patent family members relating to the patent documents cited in the above-mentioned European search report.
The members are as contained in the European Patent Office EDP file on
The European Patent Office is in no way liable for these particulars which are merely given for the purpose of information.

20-01-2016

| Patent document cited in search report | Publication date | Patent family member(s) | Publication date |
|---|---|---|---|
| WO 2013139885 A1 | 26-09-2013 | NONE | |
| US 2012007012 A1 | 12-01-2012 | CA 2753830 A1 | 23-09-2010 |
| | | CN 102356107 A | 15-02-2012 |
| | | EP 2408834 A1 | 25-01-2012 |
| | | ES 2525812 T3 | 30-12-2014 |
| | | JP 2012520386 A | 06-09-2012 |
| | | KR 20110139272 A | 28-12-2011 |
| | | US 2012007012 A1 | 12-01-2012 |
| | | WO 2010105985 A1 | 23-09-2010 |
| WO 2012018890 A2 | 09-02-2012 | US 2013153830 A1 | 20-06-2013 |
| | | WO 2012018890 A2 | 09-02-2012 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20120160097 A1
- WO 2012099913 A1
- WO 2005075541 A
- WO 2009027186 A
- WO 2008148766 A
- WO 2009080787 A
- WO 2011073246 A


### Non-patent literature cited in the description


- **A. WILKE.** *J. Mater. Chem.,* 2011, vol. 21, 5226-5229
- **P. J. FLORY.** *J. Am. Chem. Soc.,* 1952, vol. 74, 2718
- **H. FREY et al.** *Chem. Eur. J.,* 2000, vol. 6 (14), 2499